# EUROPEAN PATENT SPECIFICATION

(11) **EP 4 415 111 B1**
(45) Date of publication and mention of the grant of the patent: **08.07.2026**
(21) Application number: 22878368.4
(22) Date of filing: 27.09.2022
(51) Int. Cl.: H01M 10/6556, F28F 3/12, H01M 10/613, H01M 10/625, H01M 10/651, H01M 10/6554, H01M 10/6568

(54) **BATTERY-COOLING HEAT EXCHANGER**
BATTERIEKÜHLENDER WÄRMETAUSCHER
ÉCHANGEUR DE CHALEUR DE REFROIDISSEMENT DE BATTERIE

(30) Priority: 05.10.2021 JP 2021163939
(43) Date of publication of application: 14.08.2024
(73) Proprietor: Valeo Electrification, 95892 Cergy Pontoise (FR)
(72) Inventor: TAKANO, Akihiko, Kumagaya-shi Saitama 360-0193 (JP)
(74) Representative: Valeo Powertrain Systems
(86) International application number: PCT/JP2022/035893
(87) International publication number: WO 2023/058498

(56) References cited:
- WO-A1-2020/213673
- WO-A1-2020/213673
- WO-A1-2020/241431
- WO-A1-2020/262434
- JP-A- 2012 043 655
- JP-A- 2019 216 004
- JP-A- 2020 009 694
- JP-A- 2020 009 694

## Description

### Technical Field

The present invention relates to a battery-cooling heat exchanger as defined in the preamble of claim 1, and as illustrated in WO2020/213673.

### Background Art

As the battery-cooling heat exchanger of this type, a battery-cooling heat exchanger has been well-known, which includes a first metal plate 100 and a second metal plate 200 brazed to each other and is configured such that appropriate recessed and raised portions are formed in the first metal plate 100 and the second metal plate 200 and are combined to form a cavity to be a cooling medium flow path 300 between the first metal plate and the second metal plate (see Patent Literature 1).

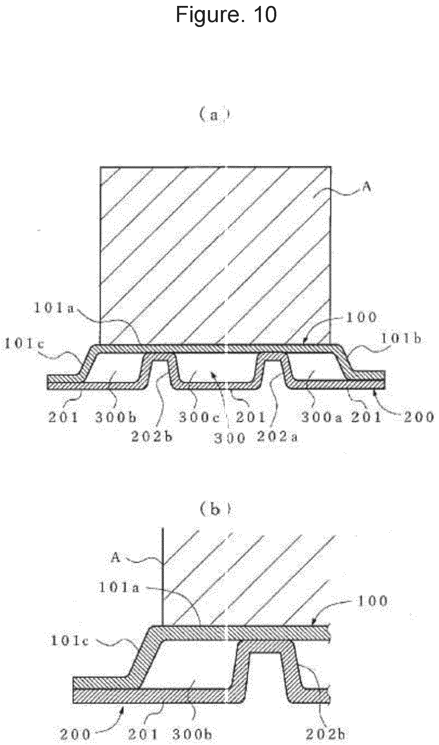

Specifically, as shown in Fig. 10, the first metal plate 100 includes a bulging surface 101a which is a flat surface thermally contacting a battery A and a first side wall surface 101b and a second side wall surface 101c formed at both side edges of the bulging surface 101a, and the second metal plate 200 includes a plurality of projections 202a, 202b protruding from a flat portion 201 so as to be joined to the bulging surface 101a and extending along the direction of extension of the cooling medium flow path 300. With this configuration, the cavity is divided into a first side gap portion 300a, i.e., a portion formed by the first side wall surface 101b, the projection 202a adjacent thereto, the bulging surface 101a, and the flat portion 201 of the second metal plate 200, a second side gap portion 300b, i.e., a portion formed by the second side wall surface 101c, the projection 202b adjacent thereto, the bulging surface 101a, and the flat portion 201 of the second metal plate 200, and a cooling medium flow portion 300c, i.e., a portion formed by the adjacent projections 202a, 202b, the bulging surface 101a, and the flat portion 201 of the second metal plate 200.

### Citation List

### Patent Literature

Patent Literature 1: WO2020/213673

### Summary of Invention

### Technical Problem

However, in the conventional configuration, the cooling medium flows in all the cavities including the side gap portions 300a, 300b on both sides to exchange heat with the battery. However, in the side gap portion 300a, 300b, a margin (brazing portion), which is positioned opposite to the projection 202a, 202b, for joint between the first metal plate 100 and the second metal plate 200 protrudes to a region apart from the bulging surface 101a, and for this reason, an area not contributing to heat exchange with the battery increases in size. Thus, it is preferred for improving a heat exchange efficiency that the battery-cooling heat exchanger is configured without the side gap portions 300a, 300b. However, in a case where the recessed and raised portions are formed in the first metal plate 100 and the second metal plate 200 and are combined to form the gap in which the cooling medium flows, it is difficult to omit the side gap portions due to, e.g., a manufacturing error and an assembly error. For avoiding a brazing failure by reliably assembling the first metal plate 100 and the second metal plate 200 with each other, it may be designed such that the side gap portions are formed in an intended manner (the first side wall portion 101b and the projection 202a are separated from each other and the second side wall portion 101c and the projection 202b are separated from each other in an intended manner).

Thus, a battery-cooling heat exchanger including side gap portions with lower efficiencies of heat exchange with a battery A needs to be designed to enhance a battery cooling efficiency.

The present invention has been made in view of the above-described situation, and a main object thereof is to provide a battery-cooling heat exchanger configured with less heat exchange between a cooling medium and a battery at a portion with a low efficiency of heat exchange with the battery and configured so that the battery can be efficiently cooled.

### Solution to Problem

In order to solve the above-described problem, a battery-cooling heat exchanger according to the present invention is a battery-cooling heat exchanger 1 thermally contacting a battery A to cool the battery A, including a first metal plate 10 thermally contactable with the battery A and a second metal plate 20 assembled with the first metal plate 10, and causing a cooling medium to flow between the first metal plate 10 and the second metal plate 20.

The battery-cooling heat exchanger 1 includes an upstream header portion 7 communicating with an inlet 2 through which the cooling medium flows in, a downstream header portion 8 communicating with an outlet 3 through which the cooling medium flows out and separated from the upstream header portion 7, and a plurality of tube forming portions 9 extending so as to cause the upstream header portion 7 and the downstream header portion 8 to communicate with each other, the upstream header portion 7, the downstream header portion 8, and the tube forming portions 9 being formed by the first metal plate 10 and the second metal plate 20.

A portion of the first metal plate 10 forming each tube forming portion 9 includes a bulging surface 11a bulging toward the battery A, a first side wall surface 11b formed at one side edge of the bulging surface 11a, and a second side wall surface 11c formed at the other side edge of the bulging surface 11a.

A portion of the second metal plate 20 forming each tube forming portion 9 includes a plurality of projections 22 bulging from a flat portion 21, 21' so as to be joined to the bulging surface 11a and extending along the direction of extension of the tube forming portions 9.

Each tube forming portion 9 includes one or both of a first side gap portion 30a formed by the first side wall surface 11b, the projection 22 adjacent thereto, the bulging surface 11a, and the flat portion 21 and a second side gap portion 30b formed by the second side wall surface 11c, the projection 22 adjacent thereto, the bulging surface 11a, and the flat portion 21, a cooling medium flow portion 40 formed by each adjacent ones of the projections 22 (22a and 22b, 22b and 22c, 22c and 22d), the bulging surface 11a, and the flat portion 21, 21' between the each adjacent ones of the projections, and one or both of a first closing portion 50a and a second closing portion 50b.

The width P (P1, P2, P3) of a flow portion heat exchange region of the cooling medium flow portion 40 facing the bulging surface 11a is wider than the width S1 of a first gap portion heat exchange region of the first side gap portion 30a facing the bulging surface 11a and the width S2 of a second gap portion heat exchange region of the second side gap portion 30b facing the bulging surface 11a.

The first side gap portion 30a is closed with the first closing portion 50a between the upstream header portion 7 and the downstream header portion 8, and the second side gap portion 30b is closed with the second closing portion 50b between the upstream header portion 7 and the downstream header portion 8.

Since the width P of the flow portion heat exchange region of the cooling medium flow portion 40 facing the bulging surface is wider than the width S1 of the first gap portion heat exchange region of the first side gap portion 30a facing the bulging surface and the width S2 of the second gap portion heat exchange region of the second side gap portion 30b facing the bulging surface, a great contact area between the battery A and the cooling medium flow portion can be ensured while the side gap portions with a low degree of contribution to heat exchange with the battery A are decreased in size as much as possible, and the efficiency of heat exchange between the battery A and the cooling medium can be enhanced.

The side gap portions are preferably omitted in order to enhance the heat exchange efficiency. However, in a case where the bulging surface and first and second side wall surfaces of the first metal plate and the plurality of projections of the second metal plate are stacked on each other to form the cooling medium flow portion between adjacent ones of the projections, it is difficult, considering a molding error, to form the projections such that the gap between the projection and the side wall portion is omitted from each side edge of the tube forming portion. For this reason, even in a case where the side gap portion can be omitted from one side edge in such a manner that the overlapping positions of the first metal plate and the second metal plate are adjusted, the side gap portion still remains at the other side edge. However, the width of the gap portion heat exchange region of the side gap portion facing the bulging surface is set smaller than the width of the flow portion heat exchange region so that the efficiency of heat exchange with the battery can be maintained high.

Further, since the first side gap portion is closed with the first closing portion between the upstream header portion and the downstream header portion and the second side gap portion is closed with the second closing portion between the upstream header portion and the downstream header portion, no cooling medium flows from the upstream header portion to the downstream header portion through the side gap portions, and therefore, the entire cooling medium can flow in the cooling medium flow portions to exchange heat with the battery and the efficiency of heat exchange between the battery and the cooling medium can be further enhanced.

The first closing portion 50a may be formed by a first notch 51a formed in the first metal plate 10 or the second metal plate 20 and protruding to the first side gap portion 30a, and the second closing portion 50b may be formed by a second notch 51b formed in the first metal plate 10 or the second metal plate 20 and protruding to the second side gap portion 30b. Since the closing portions are formed by the notches as described above, the closing portions can be formed at the same time as press-molding of the first metal plate or the second metal plate.

The cooling medium flow portion 40 may communicate, at one end thereof, with the upstream header portion 7, communicate, at the other end thereof, with the downstream header portion 8, and form, at an intermediate portion thereof, a passage meandering between the vicinity of the upstream header portion 7 and the vicinity of the downstream header portion 8. Since the cooling medium flow portion forms the meandering passage as described above, a temperature difference between a battery installed in the vicinity of the upstream header and a battery installed in the vicinity of the downstream header can be reduced.

In a case where the cooling medium does not flow in a meandering manner (case where the cooling medium linearly flows from the upstream header portion to the downstream header portion), a capacity of cooling the battery in the vicinity of the downstream header is lower as compared to the vicinity of the upstream header. The cooling medium flow portion meanders to form the flow path for flowing the cooling medium backward from the downstream header portion toward the upstream header portion, so that the capacity of cooling the battery in the vicinity of the downstream header as compared to the vicinity of the upstream header can be enhanced, temperature distribution can be narrowed in the direction of extension of the tube forming portion, and the temperature distribution of the cells of the entire batteries can be narrowed accordingly.

Further, in the heat exchanger configured such that the temperature distribution is narrowed by the meandering cooling medium flow portion as described above, the passage resistance of the cooling medium flow portion is relatively increased as compared to a case where the cooling medium flow portion does not meander. Thus, in a case where the first and second side gap portions with low heat exchange efficiencies are not closed, the cooling heat medium easily flows in the side gap portions. However, since the first and second side gap portions are closed with the closing portions 50a, 50b between the upstream header portion and the downstream header portion, such a disadvantage can be effectively avoided.

The dimension H1 of bulging of the bulging surface 11a of the first metal plate 10 may be set greater than a distance H2 between the bulging surface 11a and the second metal plate 20 in the cooling medium flow portion 40. Since the height of bulging of the bulging surface 11a is higher than the height of the cooling medium flow portion 40, this configuration is applicable to a case where the amount of bulging of the bulging surface is increased to ensure contact with the battery. In this case, the cooling medium flow portion is formed with a so-called raised bottom so that an increase in the flow path sectional area of the cooling medium flow portion can be suppressed, a decrease in the flow velocity of the cooling medium can be suppressed, and lowering of the heat exchange efficiency in the tube forming portion can be avoided.

Each tube forming portion 9 preferably has both the first side gap portion 30a and the first closing portion 50a closing the first side gap portion 30a and the second side gap portion 30b and the second closing portion closing the second side gap portion 30b. As described above, the projections may be formed such that the side gap portions are not formed at the side edges of the tube forming portion 9, but high-accuracy machining is required therefor. On this point, since the notches (first notch 51a, second notch 51b) are provided for the side gap portions (first side gap portion 30a, second side gap portion 30b) on both sides, the side gap portions can be easily closed, without special adjustment, in such a manner that the notches contact the bulging surface and the two side wall surfaces.

The first closing portion 50a provided for the first side gap portion 30a and the second closing portion 50b provided for the second side gap portion 30b may be provided with a difference in a distance from the upstream header portion 7 or the downstream header portion 8. In a case where the formation position of the closing portion formed at one side edge and the formation position of the closing portion formed at the other side edge are the same as each other in the direction of extension of the cooling medium flow portion, two relatively-thin portions formed by press-molding are formed at the same position in the extension direction, and for this reason, there is a concern about a lowering of the strength of the tube forming portion. However, in a case where the two notches are at different positions in the extension direction, the relatively-thin portions are shifted from each other in the extension direction, and therefore, a probability of the strength being lowered can be reduced.

Note that each tube forming portion 9 may have either the first side gap portion 30a and the first closing portion 50a closing the first side gap portion 30a or the second side gap portion 30b and the second closing portion closing the second side gap portion 30b. The side gap portion can be formed only on one side of the tube forming portion in such a manner that the first metal plate 10 and the second metal plate 20 are assembled with the first side wall surface 11b and the projection 22 adjacent thereto or the second side wall surface 11c and the projection 22 adjacent thereto positioned adjacent to each other. However, in this case, it is configured such that the side gap portion formed only on one side of the tube forming portion is closed with the closing portion so that the number of side gap portions with a low degree of contribution to heat exchange can be reduced.

### Advantageous Effects of Invention

As described above, according to the present invention, the first metal plate and the second metal plate are combined to form the upstream header portion, the downstream header portion separated therefrom, and the tube forming portions causing these header portions to communicate with each other. Each tube forming portion 9 has one or both of the first side gap portion 30a formed on one side and the second side gap portion formed on the other side and the cooling medium flow portion formed between each adjacent ones of the projections. The width of the flow portion heat exchange region of the cooling medium flow portion is wider than the width of the first gap portion heat exchange region of the first side gap portion and the width of the second gap portion heat exchange region of the second side gap portion. The first side gap portion is closed with the first closing portion between the upstream header portion and the downstream header portion, and the second side gap portion is closed with the second closing portion between the upstream header portion and the downstream header portion. Thus, a great contact area between the battery A and the cooling medium flow portion can be ensured, and the efficiency of heat exchange between the battery and the cooling medium can be enhanced. Moreover, no cooling medium flows from the upstream header portion to the downstream header portion through the side gap portions, and the entire cooling medium can flow in the cooling medium flow portions to exchange heat with the battery. Thus, heat exchange performance between the battery and the cooling medium can be further enhanced.

### Brief Description of Drawings

[Fig. 1] Fig. 1 is a schematic view of an entire configuration of a battery-cooling heat exchanger according to the present invention and a heat medium cycle including the battery-cooling heat exchanger.
[Fig. 2] Fig. 2 is a partially-enlarged plan view of a first example of the battery-cooling heat exchanger.
[Fig. 3] Fig. 3 is an exploded perspective view of the battery-cooling heat exchanger of Fig. 2 before assembly of a first metal plate and a second metal plate.
[Fig. 4] Fig. 4 is a view showing the section of a tube forming portion in the battery-cooling heat exchanger of Fig. 2, (a) showing a schematic sectional view of one tube forming portion along a plane substantially perpendicular to the direction of extension of the tube forming portion, (b) showing an enlarged sectional view of a portion of a second side gap portion, and (c) showing an enlarged sectional view of a portion of a first side gap portion.
[Fig. 5] Fig. 5 is a perspective view showing closing portions provided in the middle of the side gap portions and the vicinity thereof in the battery-cooling heat exchanger of Fig. 2, (a) and (b) showing perspective views of the middle of the first side gap portion from different angles and (c) and (d) showing perspective views of the middle of the second side gap portion from different angles.
[Fig. 6] Fig. 6 is a partially-enlarged plan view of a second example of the battery-cooling heat exchanger.
[Fig. 7] Fig. 7 is an exploded perspective view of the battery-cooling heat exchanger of Fig. 6 before assembly of a first metal plate and a second metal plate.
[Fig. 8] Fig. 8 is a view showing the section of a tube forming portion in a battery-cooling heat exchanger employing a first modification, (a) showing a schematic sectional view of one tube forming portion along a plane substantially perpendicular to the direction of extension of the tube forming portion, (b) showing an enlarged sectional view of a portion of a second side gap portion, and (c) showing an enlarged sectional view of a portion of a first side gap portion.
[Fig. 9] Fig. 9 is an exploded perspective view of a battery-cooling heat exchanger of a third modification before assembly of a first metal plate and a second metal plate.
[Fig. 10] Fig. 10 is a schematic sectional view showing a conventional battery-cooling heat exchanger that cools a battery, (a) showing an entire sectional view in a state of the battery-cooling heat exchanger thermally contacting the battery and (b) showing an enlarged sectional view of the vicinity of a side gap portion.

### Description of Embodiments

Hereinafter, embodiments of the present invention will be described with reference to the drawings.

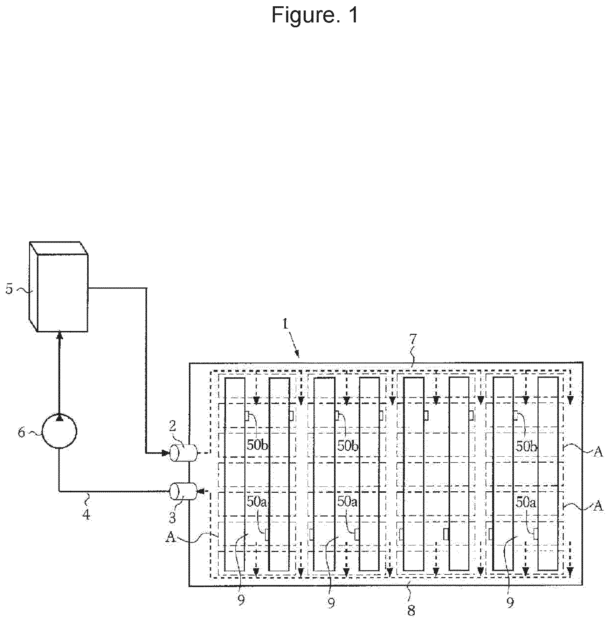

Fig. 1 is a schematic view of an entire configuration of a battery-cooling heat exchanger according to the present invention and a cooling medium cycle including the battery-cooling heat exchanger. Many batteries A indicated by chain lines are placed so as to be thermally coupled onto the battery-cooling heat exchanger 1. The battery-cooling heat exchanger 1 includes an inlet 2 through which a cooling medium such as cold water flows in and an outlet 3 through which the cooling medium flows out. The inlet 2 and the outlet 3 are connected to an external heat exchanger 5 that cools the cooling medium, such as a chiller, through pipes 4. The cooling medium is pressure-fed in the pipe 4 by actuation of a pump 6 installed in the pipe 4. Accordingly, the cooling medium is pressure-fed from the pump 6, flows into the external heat exchanger 5, is cooled, flows out of the external heat exchanger 5, flows into the inlet 2, is heated by exchanging heat with the batteries A in the battery-cooling heat exchanger 1, flows out of the outlet 3, and flows into the pump 6 by way of the pipe 4. That is, the cooling medium circulates, while carrying heat, between the battery-cooling heat exchanger 1 and the external heat exchanger 5 by the pump 6 installed in the pipe 4.

### <First Example>

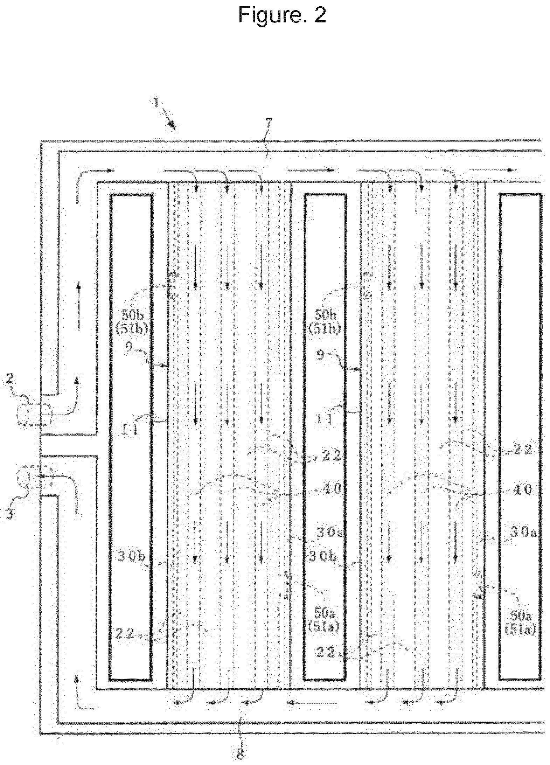

Fig. 2 is a partially-enlarged plan view of a first example of the battery-cooling heat exchanger. The battery-cooling heat exchanger 1 has an upstream header portion 7 communicating with the inlet 2, a downstream header portion 8 communicating with the outlet 3, separated from the upstream header portion 7, and extending substantially in parallel with the upstream header portion 7, and a plurality of tube forming portions 9 extending so as to cause the upstream header portion 7 and the downstream header portion 8 to communicate with each other.

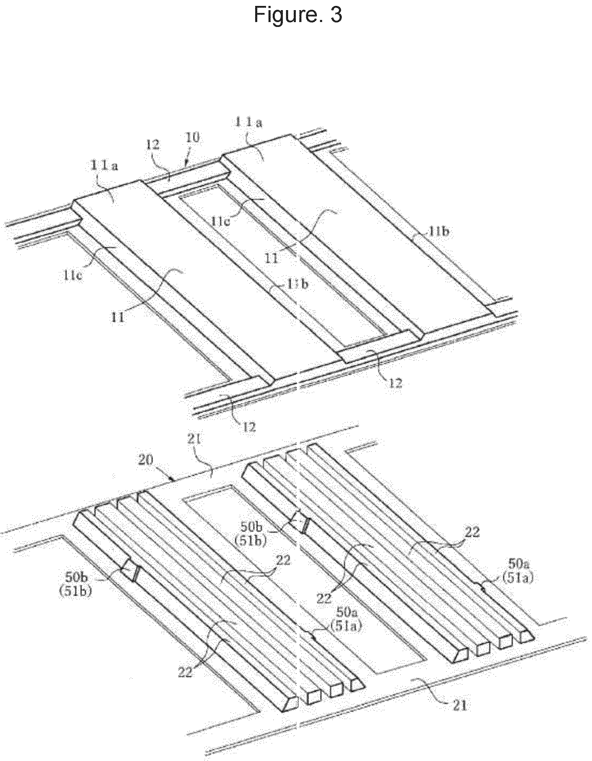

See Fig. 3. Fig. 3 is an exploded perspective view of the battery-cooling heat exchanger of Fig. 2 before assembly of a first metal plate 10 and a second metal plate 20. The upstream header portion 7, the downstream header portion 8, and the tube forming portions 9 are formed by the first metal plate 10 and the second metal plate 20 assembled therewith. The first metal plate 10 and the second metal plate 20 are pressed into predetermined shapes, and thereafter, are joined to each other by a brazing step with stacked on each other. Aluminum alloy or copper alloy is preferably used as the materials of the first metal plate 10 and the second metal plate 20. Brazing can be performed.

The first metal plate 10 includes a plurality of main bulging portions 11 bulging at predetermined intervals with brazing margins and junction bulging portions 12 bulging so as to cause adjacent ones of the main bulging portions 11 to communicate with each other at both end portions thereof, and the second metal plate 20 is formed with the substantially same size as that of the first metal plate 10 and includes projections 22 (described later) on a flat portion 21 formed flat. The tube forming portion 9 (see Figs. 1 and 2) is formed by the main bulging portion 11 of the first metal plate 10 and a portion of the second metal plate 20 formed with the projections 22, and the upstream header portion 7 and the downstream header portion 8 are formed by end portions of the main bulging portions 11 and the junction bulging portions 12 of the first metal plate 10 and the flat portion 21 of the second metal plate 20.

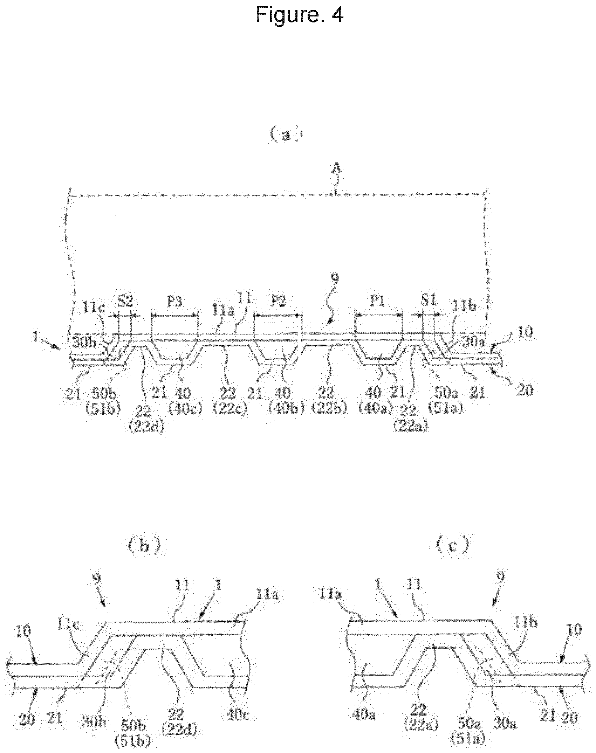

See Figs. 3 and 4. Fig. 4 is a view showing, from the downstream header portion 8 toward the upstream header portion 7, the section of the tube forming portion 9 in the battery-cooling heat exchanger of Fig. 2. A portion of the first metal plate 10 forming the tube forming portion 9, i.e., the main bulging portion 11, includes a flat bulging surface 11a bulging toward the batteries A, a first side wall surface 11b formed at one side edge of the bulging surface 11a, and a second side wall surface 11c formed at the other side edge of the bulging surface 11a. A portion of the second metal plate 20 forming the tube forming portion 9 includes the plurality of projections 22 (22a, 22b, 22c, 22d) bulging so as to be joined to the bulging surface 11a and extending along the direction of extension of the tube forming portion 9.

The tube forming portion 9 has a first side gap portion 30a formed by the first side wall surface 11b, the projection 22a adjacent thereto, the bulging surface 11a, and the flat portion 21, a second side gap portion 30b formed by the second side wall surface 11c, the projection 22d adjacent thereto, the bulging surface 11a, and the flat portion 21, and a cooling medium flow portion 40 formed by each adjacent ones of the projections 22 (22a and 22b, 22b and 22c, 22c and 22d), the bulging surface 11a, and the flat portion 21 between the each adjacent ones of the projections.

The cooling medium flow portions 40 are formed as linear passages 40a, 40b, 40c formed in parallel. In Figs. 3 and 4, the number of passages is three, but is not limited thereto. The number of passages formed for one tube forming portion 9 may be one or more, and is set as appropriate.

The width P1, P2, P3 of a flow portion heat exchange region of the cooling medium flow portion 40 facing the bulging surface 11a is formed wider than the width S1 of a first gap portion heat exchange region of the first side gap portion 30a facing the bulging surface 11a and the width S2 of a second gap portion heat exchange region of the second side gap portion 30b facing the bulging surface 11a.

See Fig. 2. The first side gap portion 30a is closed with a first closing portion 50a (described later) between the upstream header portion 7 and the downstream header portion 8, and the second side gap portion 30b is closed with a second closing portion 50b (described later) between the upstream header portion 7 and the downstream header portion 8.

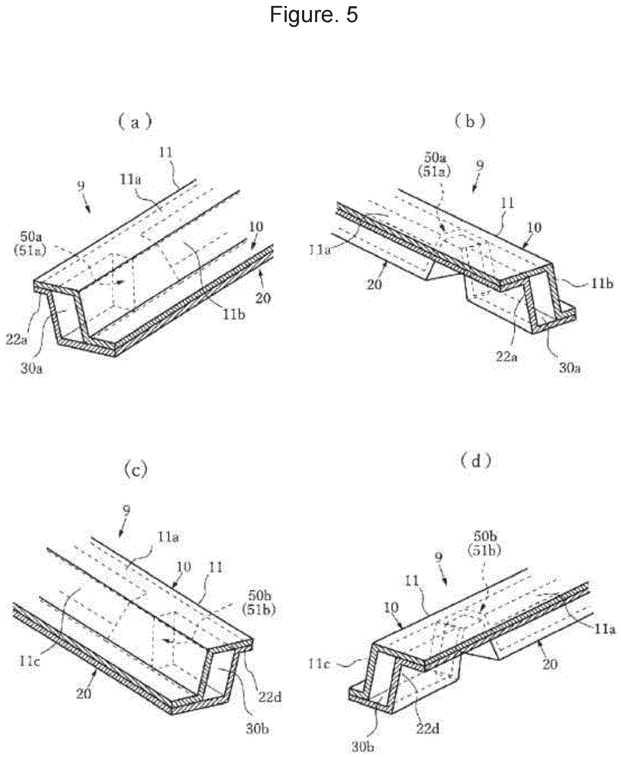

See Fig. 5. Fig. 5 is a perspective view showing the closing portion provided for the side gap portion and the vicinity thereof in the battery-cooling heat exchanger of Fig. 2. The first closing portion 50a is formed by a first notch 51a provided in the second metal plate. The first notch 51a is a portion protruding from the projection 22a toward the side wall surface 11b so as to close the first side gap portion 30a. The second closing portion 50b is formed by a second notch 51b provided for the second metal plate. The second notch 51b is a portion protruding from the projection 22d toward the side wall surface 11c so as to close the second side gap portion 30b.

More specifically, the notch (first notch 51a, second notch 51b) protrudes so as to contact not only the side wall surface (11b, 11c) but also the bulging surface 11a, and as viewed from the direction of extension of the passage of the cooling medium flow portion 40, is formed with the substantially same sectional shape as that of the side gap portion (first side gap portion 30a, second side gap portion 30b). With this configuration, in the brazing step, the upper surface of the notch (first notch 51a, second notch 51b) can be brazed to the bulging surface 11a of the first metal plate 10, and the side surface of the notch (first notch 51a, second notch 51b) can be brazed to the side wall surface 11b, 11c of the first metal plate 10.

The notch (first notch 51a, second notch 51b) is formed, for example, by a step of pressing the second metal plate 20.

See Figs. 2 and 3. The first closing portion 50a closing the first side gap portion 30a is provided at a position closer to the upstream header portion 7 with respect to a middle position of the tube forming portion 9 in the direction of extension thereof, and the second closing portion 50b closing the second side gap portion 30b is provided at a position closer to the downstream header portion 8 with respect to the middle position of the tube forming portion 9.

In the above-described configuration, the cooling medium having flowed in through the inlet 2 flows in the upstream header portion 7, and flows so as to branch into the cooling medium flow portions 40 of each tube forming portion 9. The cooling medium flow portions 40 of each tube forming portion 9 are formed as the plurality of linear passages provided in parallel, and therefore, the cooling medium having flowed into each cooling medium flow portion 40 from the upstream header portion 7 moves toward the downstream header portion 8. In the course of such movement, the batteries A and the cooling medium exchange heat through the bulging surfaces 11a contacting the batteries A, and the batteries A are cooled accordingly. The cooling medium having flowed in each cooling medium flow portion 40 flows into the downstream header portion 8, is joined together therein, flows out through the outlet 3, and is sent to the external heat exchanger 5.

In each tube forming portion 9, the cooling medium also enters both the first side gap portion 30a and the second side gap portion 30b. Since the width S1 of the first gap portion heat exchange region facing the bulging surface 11a and the width S2 of the second gap portion heat exchange region facing the bulging surface 11a in these side gap portions (first side gap portion 30a, second side gap portion 30b) are narrower than the width P1, P2, P3 of the flow portion heat exchange region of each cooling medium flow portion 40 facing the bulging surface 11a, the side gap portion (first side gap portion 30a, second side gap portion 30b) with a low degree of contribution to heat exchange with the batteries A is decreased in size so that a great contact area between the batteries A and the cooling medium flow portion 40 can be ensured. Thus, the efficiency of heat exchange between the batteries A and the cooling medium can be enhanced.

In a case where the width S1 of the first gap portion heat exchange region and the width S2 of the second gap portion heat exchange region are narrower than the width P1, P2, P3 of the flow portion heat exchange region, when the cooling medium flows in each side gap portion (first side gap portion 30a, second side gap portion 30b), the heat exchange efficiency is lower accordingly as compared to a case where the cooling medium flows in the cooling medium flow portion 40. However, the first side gap portion 30a is closed with the first closing portion 50a between the upstream header portion 7 and the downstream header portion 8, and the second side gap portion 30b is closed with the second closing portion 50b between the upstream header portion 7 and the downstream header portion 8. Thus, the entire cooling medium branched into the tube forming portions 9 can flow in the cooling medium flow portions 40 without flowing through each side gap portion (first side gap portion 30a, second side gap portion 30b), and the efficiency of heat exchange with the batteries A can be enhanced accordingly.

In the present example, since the notches 51a, 51b are provided for the side gap portions (first side gap portion 30a, second side gap portion 30b) on both sides, the side gap portions (first side gap portion 30a, second side gap portion 30b) can be easily closed, without special adjustment between the first metal plate 10 and the second metal plate 20, in such a manner that the notches 51a, 52b formed in the second metal plate 20 contact the bulging surface 11a and the two side wall surfaces 11b, 11c. At this time, the first side wall surface 11b and the side surface of the projection 22a facing the first side wall surface 11b and the second side wall surface 11c and the side surface of the projection 22d facing the second side wall surface 11c may be inclined so as to expand outward with distance from the batteries A so that the first metal plate and the second metal plate can be easily assembled with each other.

Note that the side gap portions (first side gap portion 30a, second side gap portion 30b) are preferably omitted in order to enhance the heat exchange efficiency, but it is difficult, considering a molding error and an assembly error, to form the projections 22 without the side gap portions (first side gap portion 30a, second side gap portion 30b) at both side edges of each tube forming portion 9. For this reason, even in a case where the side gap portion can be omitted from one side edge of each tube forming portion 9 in such a manner that the overlapping positions of the first metal plate 10 and the second metal plate 20 are adjusted, the side gap portion still remains at the other side edge. Thus, in a case where only either one of the first side gap portion 30a or the second side gap portion 30b is formed, only the closing portion corresponding to such a side gap portion may be formed.

The first closing portion 50a provided for the first side gap portion 30a and the second closing portion 50b provided for the second side gap portion 30b are provided with a difference in a distance from the upstream header portion 7 or the downstream header portion 8 (difference in a formation position in the direction of extension of the tube forming portion 9), and therefore, the strength of the tube forming portion 9 is not degraded. When the notches are formed in the second metal plate 20 by pressing, the portions formed with the notches are relatively thin, and strain is accumulated around the notches. For this reason, in a case where the first closing portion 50a closing the first side gap portion 30a and the second closing portion 50b closing the second side gap portion 30b are formed at the same position in the direction of extension of the tube forming portion 9, the thin portions are formed at the same position in the extension direction at both side edges of the tube forming portion 9, and there is a concern about lowering of the strength. However, in the present example, the first notch 51a forming the first closing portion 50a and the second notch 51b forming the second closing portion 50b are provided at different positions in the direction of extension of the tube forming portion 9, and therefore, the relatively-thin portions and the portions where the strain is accumulated are at positions shifted from each other in the extension direction. Thus, a probability of the strength being lowered can be reduced.

Note that two or more closing portions closing the side gap portion (first side gap portion 30a, second side gap portion 30b) may be provided for one side gap portion, but in the case of providing two or more closing portions, a closed space where gas (air) is sealed is formed by the adjacent closing portions in the side gap portion. The sealed gas and the cooling medium are different from each other in the coefficient of expansion in association with a temperature, and for this reason, there is a concern about unintended stress being caused according to a change in the temperature of the heat exchanger. For this reason, one closing portion is preferably provided for one side gap portion.

### <Second Example>

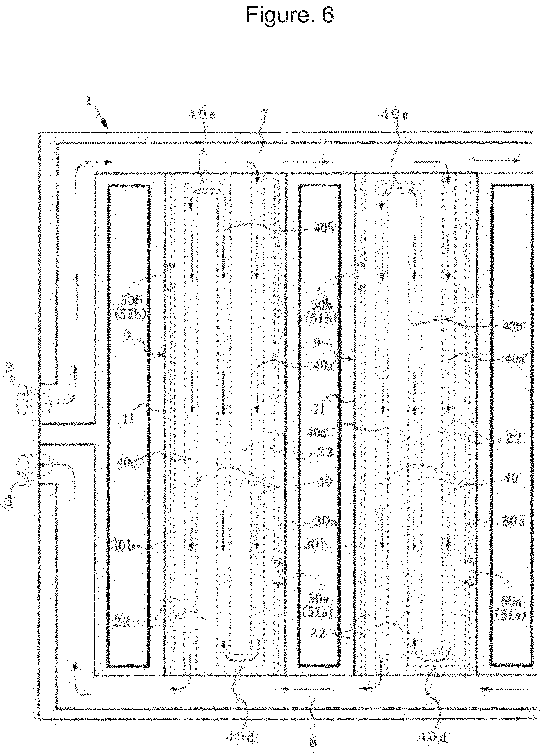

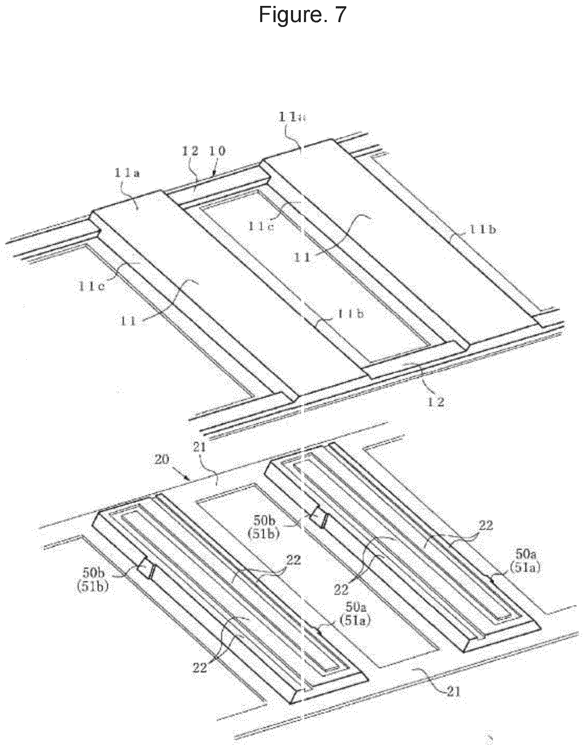

In the above-described example, the configuration capable of obtaining a high heat exchange efficiency between the tube forming portion 9 and the batteries A can be provided. However, the cooling medium flowing in the tube forming portion 9 linearly flows from the upstream header portion 7 toward the downstream header portion 8, and therefore, a cell of the battery A closer to the upstream header portion 7 is more cooled relative to a cell of the battery A closer to the downstream header portion 8 and there is a concern about a disadvantage of the entire batteries being not uniformly cooled. For this reason, the shape of the cooling medium flow portion 40 may be designed, as a second example, such that the batteries A are uniformly cooled, as shown in Figs. 6 and 7. Note that in description of the second example below, the same reference numerals are used to represent elements common to the first example, description thereof will be omitted, and differences from the first example will be mainly described.

See Figs. 6 and 7. Fig. 6 is a partially-enlarged plan view of the second example of the battery-cooling heat exchanger. Fig. 7 is an exploded perspective view of the battery-cooling heat exchanger of Fig. 6 before assembly of a first metal plate and a second metal plate. Of the cooling medium flow portion 40, one end communicates with the upstream header portion 7, the other end communicates with the downstream header portion 8, and an intermediate portion is formed as a passage meandering between the vicinity of the upstream header portion 7 and the vicinity of the downstream header portion 8. In the second example, the cooling medium flow portion 40 has a first flow portion 40a' communicating with the upstream header portion 7 and extending to the vicinity of the downstream header portion 8, a second flow portion 40b' connected to the first flow portion 40a' through a folded-back flow portion 40d and extending from the vicinity of the downstream header portion 8 to the vicinity of the upstream header portion 7, and a third flow portion 40c' connected to the second flow portion 40b' through a folded-back flow portion 40e, extending from the vicinity of the upstream header portion 7, and communicating with the downstream header portion 8, and is entirely formed in an S-shape.

In this configuration, not only features and effects similar to those of the first example are obtained, but also the cooling medium flowing in the upstream header portion 7 makes one and a half round trips to the downstream header portion 8 in the tube forming portion 9 in the direction of extension thereof, and therefore, the temperature difference between the cell of the battery A installed in the vicinity of the upstream header portion 7 and the cell of the battery A installed in the vicinity of the downstream header portion 8 can be reduced. In a case where the cooling medium does not flow in a meandering manner (the case of the first example where the cooling medium linearly flows from the upstream header portion 7 to the downstream header portion 8), a capacity of cooling the batteries A in the vicinity of the downstream header portion is lower than that in the vicinity of the upstream header portion, and the distribution of the temperature of the cell of the battery A is great. On the other hand, in the present example where the cooling medium flow portion 40 meanders to form the flow path for flowing the cooling medium backward from the downstream header portion 8 toward the upstream header portion 7, the temperature of the cooling medium flowing in the second flow portion 40b' is lower in the vicinity of the downstream header portion 8 than in the vicinity of the upstream header portion 7, and therefore, a capacity of cooling the batteries A in the vicinity of the downstream header portion as compared to the vicinity of the upstream header portion can be enhanced and the distribution of the temperature of the battery can be narrowed in the direction of extension of the tube forming portion 9.

In a case where an attempt is made to narrow the temperature distribution by the meandering cooling medium flow portion 40 as described above and the first side gap portion 30a and the second side gap portion 30b are not closed with the closing portions 50a, 50b, the passage resistance of the cooling medium flow portion 40 is relatively higher than those of the first side gap portion 30a and the second side gap portion 30b. Thus, the cooling medium easily flows in the first side gap portion 30a and the second side gap portion 30b with low heat exchange efficiencies. However, since the first side gap portion 30a is closed with the first closing portion 50a and the second side gap portion 30b is closed with the second closing portion 50b, the cooling medium flowing therein can be blocked and lowering of the heat exchange efficiency can be effectively blocked.

Subsequently, modifications applicable to the first example and the second example will be described.

### <First Modification>

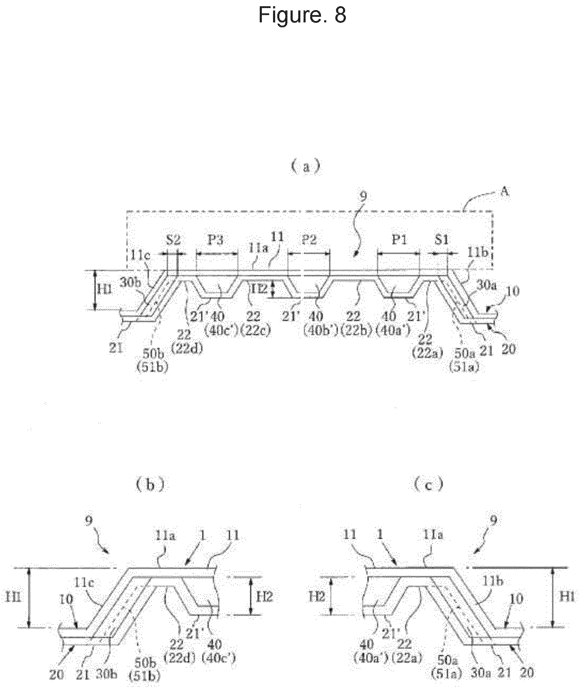

See Fig. 8. Fig. 8 is a view showing, from the downstream header portion 8 toward the upstream header portion 7, the section of the tube forming portion 9 in a battery-cooling heat exchanger of a first modification. The dimension (H1) of bulging of the bulging surface 11a of the first metal plate 10 is set greater than a distance (H2) between the bulging surface 11a and the second metal plate 20 in the cooling medium flow portion 40. A distance between the bulging surface 11a and the second metal plate 20 in the first side gap portion 30a and the second side gap portion 30b is the same as the dimension of bulging of the bulging surface 11a, but is greater than the distance between the bulging surface 11a and the second metal plate 20 in the cooling medium flow portion 40. Thus, a flat portion 21' forming the lower end of the cooling medium flow portion 40 of the tube forming portion 9 is positioned higher than the flat portion 21 forming the lower ends of the side gap portions 30a, 30b (a so-called raised bottom is formed so that an increase in the depth of the cooling medium passage 40 can be avoided).

Note that other configurations are similar to those of the above-described configuration examples, and therefore, the same reference numerals are used to represent the same elements and description thereof will be omitted.

Further, in this first modification, the height (dimension H1 of bulging of the bulging surface 11a) of the main bulging portion 11 is greater than the height (distance H2 between the bulging surface 11a and the second metal plate 20 in the cooling medium flow portion 40) of the cooling medium flow portion 40, and therefore, the first modification is applicable to a case where the amount of bulging of the bulging surface 11a is increased to ensure contact with the batteries A. That is, the battery-cooling heat exchanger can be easily thermally coupled to the batteries A according to the layout of the batteries A mounted on a vehicle. Moreover, the cooling medium flow portion 40 is formed with the so-called raised bottom so that an increase in the flow path sectional area of the cooling medium flow portion 40 can be suppressed, a decrease in the flow velocity of the cooling medium can be suppressed, and lowering of the heat exchange efficiency in the tube forming portion 9 can be avoided.

### <Second Modification>

The example where the closing portions 50a, 50b are formed by the notches 51a, 51b formed in the second metal plate 20 has been described so far, but the closing portions 50a, 50b may be formed by notches formed in the first metal plate 10 or formed by butting notches formed in the first metal plate 10 and the second metal plate 20.

### <Third Modification>

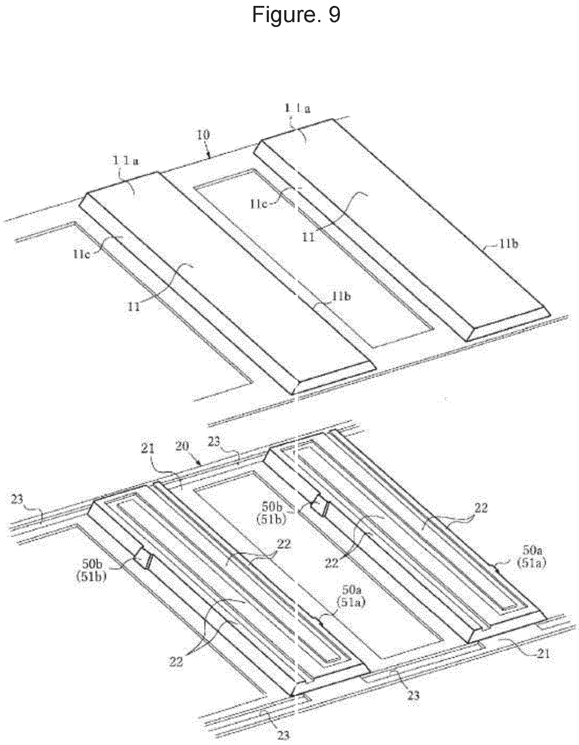

See Fig. 9. Fig. 9 is an exploded perspective view of a battery-cooling heat exchanger of a third modification before assembly of the first metal plate 10 and the second metal plate 20. The upstream header portion 7 and the downstream header portion 8 described in the first example and the second example are formed by the main bulging portions 11 and the junction bulging portions 12 formed in the first metal plate, but as shown in Fig. 9, recessed portions 23 may be formed in the second metal plate 20 so as to cause the main bulging portions 11 to communicate with each other and no junction bulging portions 12 may be formed in the first metal plate 10. Alternatively, both the junction bulging portions 12 and the recessed portions 23 may be formed.

The three modifications described above may be used alone for the first example or the second example, or two or three of the modifications may be used in combination.

### Reference Signs List

1. Battery-cooling heat exchanger
2 Inlet
3 Outlet
7 Upstream header portion
8 Downstream header portion
9 Tube forming portion
10 First metal plate
11 Main bulging portion
11a Bulging surface
11b First side wall surface
11c Second side wall surface
20 Second metal plate
21, 21' Flat portion
22, 22a to 22d Projection
30a First side gap portion
30b Second side gap portion
40 Cooling medium flow portion
50a First closing portion
50b Second closing portion
51a First notch
51b Second notch
A Battery

## Claims

1. A battery-cooling heat exchanger 1 thermally contacting a battery A to cool the battery A, including a first metal plate 10 thermally contactable with the battery A and a second metal plate 20 assembled with the first metal plate 10, and causing a cooling medium to flow between the first metal plate 10 and the second metal plate 20, comprising:
an upstream header portion 7 communicating with an inlet 2 through which the cooling medium flows in, a downstream header portion 8 communicating with an outlet 3 through which the cooling medium flows out and separated from the upstream header portion 7, and a plurality of tube forming portions 9 extending so as to cause the upstream header portion 7 and the downstream header portion 8 to communicate with each other, the upstream header portion 7, the downstream header portion 8, and the tube forming portions 9 being formed by the first metal plate 10 and the second metal plate 20,
wherein a portion of the first metal plate 10 forming each tube forming portion 9 includes a bulging surface 11a bulging toward the battery A, a first side wall surface 11b formed at one side edge of the bulging surface 11a, and a second side wall surface 11c formed at the other side edge of the bulging surface 11a,
a portion of the second metal plate 20 forming each tube forming portion 9 includes a plurality of projections 22a to 22d bulging from a flat portion 21, 21' so as to be joined to the bulging surface 11a and extending along a direction of extension of the tube forming portions 9,
each tube forming portion 9 includes one or both of a first side gap portion 30a formed by the first side wall surface 11b, the projection 22a adjacent thereto, the bulging surface 11a, and the flat portion 21 and a second side gap portion 30b formed by the second side wall surface 11c, the projection 22d adjacent thereto, the bulging surface 11a, and the flat portion 21, a cooling medium flow portion 40 formed by each adjacent ones of the projections 22a to 22d, the bulging surface 11a, and the flat portion 21, 21' between the each adjacent ones of the projections and one or both of a first closing portion 50a and a second closing portion 50b, the battery-cooling heat exchanger being **characterized in that**
a width P of a flow portion heat exchange region of the cooling medium flow portion 40 facing the bulging surface 11a is wider than a width S1 of a first gap portion heat exchange region of the first side gap portion 30a facing the bulging surface 11a and a width S2 of a second gap portion heat exchange region of the second side gap portion 30b facing the bulging surface 11a, and
the first side gap portion 30a is closed with the first closing portion 50a between the upstream header portion 7 and the downstream header portion 8, and the second side gap portion 30b is closed with the second closing portion 50b between the upstream header portion 7 and the downstream header portion 8.

2. The battery-cooling heat exchanger according to claim 1, wherein the first closing portion 50a is formed by a first notch 51a formed in the first metal plate 10 or the second metal plate 20 and protruding to the first side gap portion 30a, and the second closing portion 50b is formed by a second notch 51b formed in the first metal plate 10 or the second metal plate 20 and protruding to the second side gap portion 30b.

3. The battery-cooling heat exchanger according to claim 1 or 2, wherein the cooling medium flow portion 40 communicates, at one end thereof, with the upstream header portion 7, communicates, at the other end thereof, with the downstream header portion 8, and forms, at an intermediate portion thereof, a passage meandering between a vicinity of the upstream header portion 7 and a vicinity of the downstream header portion **8.**

4. The battery-cooling heat exchanger according to any one of claims 1 to 3, wherein a dimension H1 of bulging of the bulging surface 11a of the first metal plate 10 is set greater than a distance H2 between the bulging surface 11a and the second metal plate 20 in the cooling medium flow portion 40.

5. The battery-cooling heat exchanger according to any one of claims 1 to 4, wherein each tube forming portion 9 has both the first side gap portion 30a and the first closing portion 50a closing the first side gap portion 30a and the second side gap portion 30b and the second closing portion 50b closing the second side gap portion 30b.

6. The battery-cooling heat exchanger according to claim 5, wherein the first closing portion 50a provided for the first side gap portion 30a and the second closing portion 50b provided for the second side gap portion 30b are provided with a difference in a distance from the upstream header portion 7 or the downstream header portion 8.

7. The battery-cooling heat exchanger according to any one of claims 1 to 4, wherein each tube forming portion 9 has either the first side gap portion 30a and the first closing portion 50a closing the first side gap portion 30a or the second side gap portion 30b and the second closing portion 50b closing the second side gap portion 30b.

## Patentansprüche

1. Ein Batterie-Kühlwärmetauscher 1, der thermisch mit einer Batterie A in Kontakt steht, um die Batterie A zu kühlen, umfassend eine erste Metallplatte 10, die thermisch mit der Batterie A in Kontakt bringbar ist, und eine zweite Metallplatte 20, die mit der ersten Metallplatte 10 zusammengebaut ist, und der ein Kühlmedium zwischen der ersten Metallplatte 10 und der zweiten Metallplatte 20 fließen lässt, umfassend:
einen stromaufwärtigen Kopfteil 7, der mit einem Einlass 2 in Verbindung steht, durch den das Kühlmedium einströmt, einen stromabwärtigen Kopfteil 8, der mit einem Auslass 3 in Verbindung steht, durch den das Kühlmedium ausströmt und vom stromaufwärtigen Kopfteil 7 getrennt ist, und eine Vielzahl von rohrbildenden Abschnitten 9, die sich so erstrecken, dass sie den stromaufwärtigen Kopfteil 7 und den stromabwärtigen Kopfteil 8 miteinander verbinden, wobei der stromaufwärtige Kopfteil 7, der stromabwärtige Kopfteil 8 und die rohrbildenden Abschnitte 9 durch die erste Metallplatte 10 und die zweite Metallplatte 20 gebildet werden,
wobei ein Teil der ersten Metallplatte 10, der jeden rohrbildenden Abschnitt 9 bildet, eine zur Batterie A hin ausgebauchte Wölbfläche 11a, eine erste Seitenwandfläche 11b, die an einer Seitenkante der Wölbfläche 11a ausgebildet ist, und eine
zweite Seitenwandfläche 11c, die an der anderen Seitenkante der Wölbfläche 11a ausgebildet ist, umfasst,
ein Teil der zweiten Metallplatte 20, der jeden rohrbildenden Abschnitt 9 bildet, eine Vielzahl von Vorsprüngen 22a bis 22d umfasst, die von einem flachen Abschnitt 21, 21' so hervorstehen, dass sie mit der Wölbfläche 11a verbunden sind und sich entlang einer Erstreckungsrichtung der rohrbildenden Abschnitte 9 erstrecken,
jeder rohrbildende Abschnitt 9 einen oder beide von einem ersten Seitenspaltabschnitt 30a, der durch die erste Seitenwandfläche 11b, den daran angrenzenden Vorsprung 22a, die Wölbfläche 11a und den flachen Abschnitt 21 gebildet wird, und einem zweiten Seitenspaltabschnitt 30b, der durch die zweite Seitenwandfläche 11c, den daran angrenzenden Vorsprung 22d, die Wölbfläche 11a und den flachen Abschnitt 21 gebildet wird, einen Kühlmediumströmungsabschnitt 40, der durch jeweils benachbarte Vorsprünge 22a bis 22d, die Wölbfläche 11a und den flachen Abschnitt 21, 21' zwischen den jeweils benachbarten Vorsprüngen und einen oder beide von einem ersten Verschlussabschnitt 50a und einem zweiten Verschlussabschnitt 50b gebildet wird, umfasst, wobei der Batterie-Kühlwärmetauscher **dadurch gekennzeichnet ist, dass**
eine Breite P eines Strömungsabschnitt-Wärmeaustauschbereichs des Kühlmediumströmungsabschnitts 40, der der Wölbfläche 11a zugewandt ist, breiter ist als eine Breite S1 eines ersten Spaltabschnitt-Wärmeaustauschbereichs des ersten Seitenspaltabschnitts 30a, der der Wölbfläche 11a zugewandt ist, und eine Breite S2 eines zweiten Spaltabschnitt-Wärmeaustauschbereichs des zweiten Seitenspaltabschnitts 30b, der der Wölbfläche 11a zugewandt ist, und
der erste Seitenspaltabschnitt 30a mit dem ersten Verschlussabschnitt 50a zwischen dem stromaufwärtigen Kopfteil 7 und dem stromabwärtigen Kopfteil 8 verschlossen ist, und der zweite Seitenspaltabschnitt 30b mit dem zweiten Verschlussabschnitt 50b zwischen dem stromaufwärtigen Kopfteil 7 und dem stromabwärtigen Kopfteil 8 verschlossen ist.

2. Der Batterie-Kühlwärmetauscher nach Anspruch 1, wobei der erste Verschlussabschnitt 50a durch eine erste Kerbe 51a gebildet wird, die in der ersten Metallplatte 10 oder der zweiten Metallplatte 20 ausgebildet ist und in den ersten Seitenspaltabschnitt 30a hineinragt, und der zweite Verschlussabschnitt 50b durch eine zweite Kerbe 51b gebildet wird, die in der ersten Metallplatte 10 oder der zweiten Metallplatte 20 ausgebildet ist und in den zweiten Seitenspaltabschnitt 30b hineinragt.

3. Der Batterie-Kühlwärmetauscher nach Anspruch 1 oder 2, wobei der Kühlmediumströmungsabschnitt 40 an einem Ende mit dem stromaufwärtigen Kopfteil 7 in Verbindung steht, an dem anderen Ende mit dem stromabwärtigen Kopfteil 8 in Verbindung steht und an einem Zwischenabschnitt einen Durchgang bildet, der zwischen einer Nähe
des stromaufwärtigen Kopfteils 7 und einer Nähe des stromabwärtigen Kopfteils 8 mäandert.

4. Der Batterie-Kühlwärmetauscher nach einem der Ansprüche 1 bis 3, wobei eine Wölbungsabmessung H1 der Wölbfläche 11a der ersten Metallplatte 10 größer eingestellt ist als ein Abstand H2 zwischen der Wölbfläche 11a und der zweiten Metallplatte 20 im Kühlmediumströmungsabschnitt 40.

5. Der Batterie-Kühlwärmetauscher nach einem der Ansprüche 1 bis 4, wobei jeder rohrbildende Abschnitt 9 sowohl den ersten Seitenspaltabschnitt 30a und den ersten Verschlussabschnitt 50a, der den ersten Seitenspaltabschnitt 30a verschließt, als auch den zweiten Seitenspaltabschnitt 30b und den zweiten Verschlussabschnitt 50b, der den zweiten Seitenspaltabschnitt 30b verschließt, aufweist.

6. Der Batterie-Kühlwärmetauscher nach Anspruch 5, wobei der für den ersten Seitenspaltabschnitt 30a vorgesehene erste Verschlussabschnitt 50a und der für den zweiten Seitenspaltabschnitt 30b vorgesehene zweite Verschlussabschnitt 50b mit einem Unterschied in einem Abstand vom stromaufwärtigen Kopfteil 7 oder dem stromabwärtigen Kopfteil 8 vorgesehen sind.

7. Der Batterie-Kühlwärmetauscher nach einem der Ansprüche 1 bis 4, wobei jeder rohrbildende Abschnitt 9 entweder den ersten Seitenspaltabschnitt 30a und den ersten Verschlussabschnitt 50a, der den ersten Seitenspaltabschnitt 30a verschließt, oder den zweiten Seitenspaltabschnitt 30b und den zweiten Verschlussabschnitt 50b, der den zweiten Seitenspaltabschnitt 30b verschließt, aufweist.

## Revendications

1. Echangeur de chaleur de refroidissement de batterie 1 en contact thermique avec une batterie A pour refroidir la batterie A, comprenant une première plaque métallique 10 pouvant être en contact thermique avec la batterie A et une seconde plaque métallique 20 assemblée avec la première plaque métallique 10, et permettant à un milieu de refroidissement de circuler entre la première plaque métallique 10 et la seconde plaque métallique 20, comprenant :
une partie de collecteur amont 7 communiquant avec une entrée 2 par laquelle le milieu de refroidissement s'écoule, une partie de collecteur aval 8 communiquant avec une sortie 3 par laquelle le milieu de refroidissement s'écoule et séparée de la partie de collecteur amont 7, et une pluralité de portions formant des tubes 9 s'étendant de manière à faire communiquer la partie de collecteur amont 7 et la partie de collecteur aval 8, la partie de collecteur amont 7, la partie de collecteur aval 8 et les portions formant des tubes 9 étant formées par la première plaque métallique 10 et la seconde plaque métallique 20,
dans lequel une portion de la première plaque métallique 10 formant chaque portion formant un tube 9 comprend une surface bombée 11a bombant vers la batterie A, une première surface de paroi latérale 11b formée à un bord latéral de la surface bombée 11a, et une seconde surface de paroi latérale 11c formée à l'autre bord latéral de la surface bombée 11a,
une portion de la seconde plaque métallique 20 formant chaque portion formant un tube 9 comprend une pluralité de projections 22a à 22d bombant à partir d'une portion plate 21, 21' de manière à être jointes à la surface bombée 11a et s'étendant le long d'une direction d'extension des portions formant des tubes 9,
chaque portion formant un tube 9 comprend une ou les deux d'une première portion d'espace latéral 30a formée par la première surface de paroi latérale 11b, la projection 22a adjacente à celle-ci, la surface bombée 11a et la portion plate 21, et une seconde portion d'espace latéral 30b formée par la seconde surface de paroi latérale 11c, la projection 22d adjacente à celle-ci, la surface bombée 11a et la portion plate 21, une portion d'écoulement du milieu de refroidissement 40 formée par chaque projection adjacente des projections 22a à 22d, la surface bombée 11a et la portion plate 21, 21' entre chaque projection adjacente et une ou les deux d'une première portion de fermeture 50a et d'une seconde portion de fermeture 50b, l'échangeur de chaleur de refroidissement de batterie étant **caractérisé en ce que**
une largeur P d'une région d'échange de chaleur de la portion d'écoulement du milieu de refroidissement 40 faisant face à la surface bombée 11a est plus large qu'une largeur S1 d'une région d'échange de chaleur de la première portion d'espace latéral 30a faisant face à la surface bombée 11a et une largeur S2 d'une région d'échange de chaleur de la seconde portion d'espace latéral 30b faisant face à la surface bombée 11a, et
la première portion d'espace latéral 30a est fermée avec la première portion de fermeture 50a entre la partie de collecteur amont 7 et la partie de collecteur aval 8, et la seconde portion d'espace latéral 30b est fermée avec la seconde portion de fermeture 50b entre la partie de collecteur amont 7 et la partie de collecteur aval 8.

2. Echangeur de chaleur de refroidissement de batterie selon la revendication 1, dans lequel la première portion de fermeture 50a est formée par une première encoche 51a formée dans la première plaque métallique 10 ou la seconde plaque métallique 20 et faisant saillie vers la première portion d'espace latéral 30a, et la seconde portion de fermeture 50b est formée par une seconde encoche 51b formée dans la première plaque métallique 10 ou la seconde plaque métallique 20 et faisant saillie vers la seconde portion d'espace latéral 30b.

3. Echangeur de chaleur de refroidissement de batterie selon la revendication 1 ou 2, dans lequel la portion d'écoulement du milieu de refroidissement 40 communique, à une extrémité de celle-ci, avec la partie de collecteur amont 7, communique, à l'autre extrémité de celle-ci, avec la partie de collecteur aval 8, et forme, à une portion intermédiaire de celle-ci, un passage sinueux entre une proximité de la partie de collecteur amont 7 et une proximité de la partie de collecteur aval 8.

4. Echangeur de chaleur de refroidissement de batterie selon l'une quelconque des revendications 1 à 3, dans lequel une dimension H1 de bombement de la surface bombée 11a de la première plaque métallique 10 est fixée plus grande qu'une distance H2 entre la surface bombée 11a et la seconde plaque métallique 20 dans la portion d'écoulement du milieu de refroidissement 40.

5. Echangeur de chaleur de refroidissement de batterie selon l'une quelconque des revendications 1 à 4, dans lequel chaque portion formant un tube 9 a à la fois la première portion d'espace latéral 30a et la première portion de fermeture 50a fermant la première portion d'espace latéral 30a et la seconde portion d'espace latéral 30b et la seconde portion de fermeture 50b fermant la seconde portion d'espace latéral 30b.

6. Echangeur de chaleur de refroidissement de batterie selon la revendication 5, dans lequel la première portion de fermeture 50a prévue pour la première portion d'espace latéral 30a et la seconde portion de fermeture 50b prévue pour la seconde portion d'espace latéral 30b sont prévues avec une différence de distance par rapport à la partie de collecteur amont 7 ou la partie de collecteur aval 8.

7. Echangeur de chaleur de refroidissement de batterie selon l'une quelconque des revendications 1 à 4, dans lequel chaque portion formant un tube 9 a soit la première portion d'espace latéral 30a et la première portion de fermeture 50a fermant la première portion d'espace latéral 30a, soit la seconde portion d'espace latéral 30b et la seconde portion de fermeture 50b fermant la seconde portion d'espace latéral 30b.
